# EUROPÄISCHE PATENTSCHRIFT

(11) **EP 4 026 683 B1**
(45) Veröffentlichungstag und Bekanntmachung des Hinweises auf die Patenterteilung: **27.03.2024**
(21) Anmeldenummer: 21190679.7
(22) Anmeldetag: 10.08.2021
(51) Int. Cl.: B29C 65/18, B29C 65/32, B29C 65/34, B29C 65/36, B29C 57/10, B29K 21/00, B29K 101/12, B29C 65/30, B29C 65/74

(54) **SCHLAUCHHEIZER UND SCHLAUCH SOWIE VERFAHREN ZUM VERSIEGELN VON THERMOPLASTISCHEN SCHLÄUCHEN UND ROHREN**
HOSE HEATER AND HOSE AND METHOD FOR SEALING THERMOPLASTIC HOSES AND PIPES
CHAUFFE-TUYAU ET TUYAU FLEXIBLE, AINSI QUE PROCÉDÉ DE SCELLAGE DE TUYAUX FLEXIBLES ET TUBES THERMOPLASTIQUES

(30) Priorität: 07.01.2021 EP 21150510
(43) Veröffentlichungstag der Anmeldung: 13.07.2022
(73) Patentinhaber: Pink, Tomas, 6215 Beromünster (CH)
(72) Erfinder: Pink, Tomas, 6215 Beromünster (CH)
(74) Vertreter: Raffay & Fleck

(56) Entgegenhaltungen:
- EP-A1- 2 452 805
- EP-A2- 2 251 183
- WO-A1-2012/051719
- WO-A1-2019/174843
- DE-A1- 1 704 131
- JP-A- H07 246 657
- US-A- 2 638 964
- US-A1- 2009 302 033

## Beschreibung

Die Erfindung betrifft das Heizen und Verschließen von thermoplastischen Schläuchen und Rohren.

Bekannt ist das induktive Verschließen und Abtrennen von Schläuchen beispielsweise aus der CN106808040A. Ebenfalls bekannt ist eine variable offene Induktionsspule zur Induktion in Metallrohre zwecks Lötung aus der CN103596310A. Auch ist es aus der US201 7252872A1 bekannt, Metallrohre mit einer Metallfolie zu umwickeln und zwecks Lötung induktiv zu schmelzen. Ebenfalls bekannt sind Induktionslötzangen, beispielsweise aus der US3365563A. Auch ist es bekannt, das Trennen von metallischen Rohren durch induktives Aufheizen zu ermöglichen, so beschrieben in der JPS51 1 34351.

Zum Versiegeln von Schläuchen ist es zu dem aus der US 2009/302033 A1 bekannt, unter Krafteinwirkung eine Heizung mittels Radiowellen durchzuführen.

Auch ist es, beispielsweise aus der EP 2 251 183 A2 bekannt, einen Ring oder Halbringe aus plastisch verformbaren Material auf einen elastischen Schlauch aufzuschieben und diese(n) zu crimpen. Der dadurch erreichte Verschluss ist jedoch nicht verschmolzen, weniger dicht und/oder weniger zuverlässig. Die Anwendung von Hitze und die Hitzeverschmelzung von dem Schlauchmaterial wird nicht erwähnt. Die genannten Schläuche sind ausschließlich elastische Schlauche, die Anwendung bei thermoplastischen Elastomeren ist nicht offenbart.

Aus einem anderen Gebiet der Technik, dem Verkleben von zwei Rohren, ist es bekannt zwecks Aushärtung des Klebers einen Heizring um die Verbindungsstelle zu legen, so beispielsweise aus der DE 1 704 131 A1. Auch ist es bekannt, eine Muffe über die Verbindungsstelle zu legen und diese induktiv zu verschweißen, so beispielsweise aus der WO 2012/051,719 A1 oder der EP 2 452 805 A1. Zudem ist es aus der WO 2019/174,843 A1 bekannt, zwecks Verbindung zweier Plastikteile ein metallisches Element zwischenzulegen und dieses Zwecks Verschmelzung der zwei Teile induktiv zu heizen. Auch ist es aus einem weiteren Gebiet der Technik bekannt, Plastiktüten unter Druck thermisch zu verschließen.

Aus der US 2,638,964 A ist diesbezüglich bekannt, eine Zwischenlage, insbesondere aus Teflon, zu verwenden, um die Anhaftung zu reduzieren.

Auch ist es aus einem andere Feld der Technik aus der JP H 07246657 A bekannt, ein Laminat in einer Presse herzustellen, während der Kleber durch ein in den Kleber eingelegtes Metallstück induktiv geheizt wird.

Grundsätzlich ist es beim Verschließen von thermoplastischen Schläuchen sehr wichtig, ein stabiles, druckbeständiges Seal (Verschluss des Schlauches) schnell und mit einer reproduzierbaren Qualität zu erzeugen.

Im Stand der Technik werden zum thermisch unterstützten Verschluss von thermoplastischen Schläuchen lediglich zwei gegeneinander liegende, parallele Flächen beheizt. Das heißt, der Schlauch muss zuerst zusammengedruckt werden, dann wird er erst in signifikantem Ausmaß beheizt und dadurch verschmolzen. Damit können vor allem härtere Schläuche nicht versiegelt werden und der Prozess dauert lange. Zudem muss der Schlauch nach dem Versiegeln noch zurückgekühlt werden.

Aufgabe der Erfindung ist es, eine entsprechende Vorrichtung, ein Verfahren und eine Verwendung anzugeben, die das Verschließen von unterschiedlichsten thermoplastischen Schläuchen, insbesondere von Shore-Härten um 50 (A) bis über 100 (A), die teilweise schon als Rohre bezeichnet werden, mit Innendurchmessern von 1,6mm bis 35mm und/oder Wanddicken von 0,8 bis 4,8mm, ermöglicht, und insbesondere handlich und reinraumtauglich ist, also insbesondere keine Partikel absondert, aufsammelt und/oder frei gibt. Zumindest der Teil der Vorrichtung, der auf den zu versiegelnden/ zu verschließenden Schlauch angesetzt wird, sollte kompakt, leicht und/oder einhändig bedienbar sein und ohne Partikelabgabe und/oder ohne Luftumwälzung ausgebildet sein. Auch sollten der Schlauch und/oder das Seal nach dem Versiegeln eine möglichst niedrige Temperatur und/oder thermische Energie aufweisen.

Einer der wesentlichen Vorteile der Erfindung ist es, dass bereits vor dem Zusammendrücken der Schlauch beheizt werden kann.

Gelöst wird die Aufgabe durch einen gemäß Anspruch 1 Das Heizelement weist mindestens vier, insbesondere mehr als sechs, gegeneinander bewegbare, insbesondere induktiv und/oder resistiv, heizbare Bereiche auf, und ist eingerichtet, von einer Richtung senkrecht zur Längserstreckung eines Schlauchs auf den Schlauch aufgesetzt zu werden, wobei der Schlauch einen Außendurchmesser im Bereich von 3,2 mm bis 45 mm und/oder einen Innendurchmesser im Bereich von 1,6 mm bis 35 mm und/oder Wanddicken im Bereich von 0,8 bis 4,8 mm aufweisen kann. Der Schlauchheizer ist eingerichtet, im aufgesetzten Zustand am Schlauch über dessen Umfang an mindestens vier voneinander beabstandeten Stellen anliegend den Schlauch zu mindestens 75% seines Umfangs zu umschließen. Dabei handelt es sich insbesondere um Stellen, die über den Umfang des Schlauchs so verteilt sind, dass sie mindestens 200° und/oder mindestens 55% des Umfangs des Schlauchs überspannen und/oder von denen sich mindestens zwei, insbesondere diametral, gegenüberliegen und/oder zwischen denen jeweils ein Winkel im Bereich von 90 bis 150°, insbesondere bis 135° oder ein Schlauchumfangsabschnitt im Bereich von 8% bis 35% des Schlauchumfangs liegt. Insbesondere ist der Schlauchheizer eingerichtet, alle Schläuche mit Außendurchmessern in mindestens einem Fünftel der Spanne von 3 mm bis 45 mm zu umschließen, also beispielsweise alle thermoplastischen Schläuche mit einem Außendurchmesser im Bereich von 21 bis 30 mm oder von 30 bis 40 mm.

Das Heizelement ist dabei so verformbar ausgebildet, dass ein von ihm umschlossener Querschnitt durch Zusammendrücken und/oder -ziehen des Heizelements verringert und/oder plattgedrückt werden kann, und zwar um mindestens 30%, insbesondere mindestens 50%. Die Reduzierung des vom Schlauchheizer umschlossenen Querschnitts ist insbesondere in Bezug auf die umschlossene Querschnittsfläche und/oder auf eine Erstreckung des Querschnitts, insbesondere die Erstreckung des Querschnitts in der Richtung der minimalen Erstreckung des Querschnitts im reduzierten Zustand, zu betrachten. Der Querschnitt ist dabei insbesondere in der Ebene senkrecht zur Längserstreckung des aufgenommenen Schlauchs zu bestimmen. Das Heizelement ist dabei insbesondere so eingerichtet, dass das Zusammendrücken eine nicht-elastische Materialverformung des Heizelements bewirkt. Das Heizelement ist dabei insbesondere so eingerichtet, dass das Zusammendrücken ohne dazwischen liegenden Schlauch eine Kraft von weniger als 100 N, insbesondere von weniger als 10 N und/oder mehr als 0,05 N, insbesondere mehr als 0,1 N, und/oder weniger als 1 kN erfordert. Dadurch, dass das Zusammendrücken, in einer vorteilhaften Ausführung, eine nicht-elastische Materialverformung des Heizelements bewirkt, ist es möglich, durch das Heizelement auch nach Entfernen einer auf dies wirkenden externen Kraft, ein Ausdehnen des Schlauchs nach dem Zusammendrücken zu verhindern oder zu reduzieren.

Die gegeneinander bewegbaren, insbesondere induktiv und/oder resistiv, heizbaren Bereiche werden dabei durch, insbesondere jeweils ein, plattenförmige(s) Element(e), auch heizbare Platte(n), gebildet. Zwischen mindestens zwei, insbesondere mehr als drei, Paaren aneinander angrenzender plattenförmiger Elemente ist jeweils ein Gelenk und/oder eine Materialschwächung vorhanden, die ein Ändern des Winkels der plattenförmigen Elemente des jeweiligen Paars zueinander erlauben. Eine Materialschwächung ist insbesondere über mindestens 80% der, insbesondere die gesamte, Breite des Heizelements und/oder der, insbesondere induktiv und/oder resistiv, beheizbaren Bereiche und/oder über mindestens 80% der, insbesondere die gesamte Erstreckung des Heizelements und/oder der, insbesondere induktiv und/oder resistiv, beheizbaren Bereiche senkrecht zur Ebene des umschlossenen Querschnitts und/oder senkrecht zu den Flächennormalen auf aneinander und an die Materialschwächung angrenzenden heizbaren Platten erstreckt ausgeführt. Eine Materialschwächung ist insbesondere so ausgeführt, dass die Materialschwächung die Dicke der angrenzenden heizbaren Platten um mindestens 30%, insbesondere mindestens 50%, insbesondere über ihre gesamte Erstreckung, unterschreitet.

Gelöst wird die Aufgabe auch durch einen thermoplastischen Schlauch gemäß Anspruch 9.

Insbesondere sind im Abstand von maximal 5 mm zwei Spangen und/oder Ringe auf dem Schlauch mit einem dazwischen liegendem Spalt, insbesondere von mindestens 0,2 mm, angeordnet. Insbesondere ist der mindestens eine Ring/die mindestens eine Spange fest auf dem Schlauch angeordnet, insbesondere auf diesen aufgeklemmt, aufgecrimpt, aufgequetscht und/oder teilweise in die Wandung des Schlauchs eindringend und/oder mit diesem verschmolzen angeordnet.

Gelöst wird die Aufgabe auch durch einen Schlauchverschließvorrichtungsaktuator gemäß Anspruch 10.

Der Schlauchverschließvorrichtungsaktuator weist weiter Mittel auf, insbesondere mindestens einen Pneumatikzylinder umfassend, eingerichtet zum Verformen des aufgenommenen Schlauchheizers so, dass der von ihm umschlossene Querschnitt um mindestens 30% verringert wird, und mindestens ein Mittel zum Bewirken eines induktiven und/oder resistiven Heizens des Heizelements, insbesondere mindestens eine Induktionsspule zum induktiven, insbesondere resistiven, Heizen des Heizelements und/oder Kontaktmittel zum elektrischen Kontaktieren des/der Heizelements/e des Schlauchheizers, aufweist.

Insbesondere weist er mindestens ein Mittel zum Heizen des Heizelements, beispielsweise eine Stromzuführung, insbesondere aber mindestens eine Induktionsspule zum induktiven, und/oder resistiven, Heizen des Heizelements, auf. Es ist aber auch möglich, eine Stromzuführung und elektrische Kontakte zum elektrischen Kontaktieren resistiver Heizelemente vorzusehen. Bezüglich der Eigenschaften des aufnehmbaren Schlauchheizers gilt insbesondere oben Ausgeführtes.

Gelöst wird die Aufgabe auch durch Schlauchverschließvorrichtungsaktuator gemäß Anspruch 11.

In einer alternativen Ausgestaltung der Vorrichtungen, Verfahren und/oder Verwendungen kann das mindestens eine Heizelement nicht ein induktiv heizbares sein und/oder nicht induktiv geheizt werden sondern als beliebiges Heizelement und/oder beliebig heizbar, beispielsweise als elektrisches Widerstandsheizelement und/oder resistiv heizbar ausgeführt sein.

In diesem Text wird unter heizbar insbesondere aktiv heizbar und/oder insbesondere ein Mittel zur Erzeugung von Wärme aus einer anderen Energieform, insbesondere elektrischem Strom, aufweisend, verstanden. Ein heizbarer Bereich ist also insbesondere ein Bereich, der Mittel zur Energieumwandlung in Wärme, insbesondere aus elektrischer Energie, aufweist, beispielsweise ein resistives Heizelement. Ein heizbares Heizelement ist also insbesondere ein Heizelement, das Mittel zur Energieumwandlung in Wärme, insbesondere aus elektrischer Energie, aufweist, beispielsweise ein resistives Heizelement. Eine heizbare Platte ist also insbesondere eine Platte, die Mittel zur Energieumwandlung in Wärme, insbesondere aus elektrischer Energie, aufweist, beispielsweise ein resistives Heizelement. Solche Mittel zur Energieumwandlung in Wärme, insbesondere aus elektrischer Energie, beispielsweise ein resistives Heizelement, können beispielsweise induktiv oder mittels elektrischer Kontakte mit Strom gespeist werden.

Insbesondere wird in das/die Mittel zur Umwandlung in Wärme Strom eingespeist, insbesondere induktiv, insbesondere ein Ringstrom.

Die Mittel zur Erzeugung von Wärme und/oder das Heizelement sind insbesondere aus Metall und/oder elektrisch leitend und/oder im Schlauchheizer und/oder im Bereich und/oder in der Platte integriert, insbesondere so, dass sie zumindest am äußeren Umfang, insbesondere gar nicht, freiliegen. Dadurch kann die Sicherheit erhöht und die Erwärmung effizienter und/oder gleichmäßiger gestaltet werden. Insbesondere sind die Mittel zum Erwärmen zum zeitgleichen und/oder gemeinsamen Betrieb ausgelegt, insbesondere so, dass sie durch eine einzelne Aktion zeitgleich aktiviert und deaktiviert werden können.

Insbesondere sind die Mittel zum Erwärmen und/oder dessen Bewirken steuerbar und/oder regelbar ausgeführt, insbesondere sodass die Menge der, insbesondere pro Zeiteinheit, erzeugten Wärme einstellbar ist.

Insbesondere sind die Mittel zur Erzeugung von Wärme, der Schlauchheizer und/oder der Schlauch so eingerichtet, dass das Erzeugen von Wärme jederzeit unterbrochen und/oder beendet werden kann. Insbesondere wird das Verfahren so geführt und/oder ist der Schlauchverschließvorrichtungsaktuator so ausgebildet, dass bei Erreichen einer Temperatur, insbesondere gemessen durch einen Temperaturfühler, insbesondere am Schlauch und/oder dem Schlauchheizer und/oder Heizelement, und/oder bei Erreichen eines vorgegebenen Querschnitts und/oder Durchmessers und/oder maximalen Erstreckung des Querschnitts in eine vorgegeben Richtung und/oder einer vorgegebenen Querschnitts- und/oder Durchmesserreduktion und/oder einer vorgegeben Reduktion einer maximalen Erstreckung in einer vorgegebenen Richtung, die beispielsweise auch durch eine vorgegebene Wegstrecke eines Aktuators gegeben sein kann, insbesondere durch das Zusammendrücken und/oder bei Unterschreiten einer für das Zusammendrücken notwendigen Kraft, das Heizen beendet und/oder reduziert wird. Dies kann beispielsweise durch die Reduktion und/oder Unterbrechen des Stromflusses, insbesondere durch das resistive Heizelement und/oder die Induktionsspule, erfolgen.

Die Mittel zum Verformen sind insbesondere eingerichtet, den Schlauchheizer zusammen und/oder platt zu drücken und/oder an gegenüberliegenden Stellen auseinanderzuziehen, insbesondere mit einer Kraft im Bereich von 10 N bis 1 kN. Im Fall des Auseinanderziehens sind sie insbesondere eingerichtet, zwei Enden des Schlauchheizers an einer gemeinsamen Stelle zusammenzuhalten.

Gelöst wird die Aufgabe auch durch ein Verfahren zum Verschließen eines thermoplastischen Schlauchs gemäß Anspruch 14.

Dabei wird der Schlauch insbesondere zu mindestens 75% seines Umfangs, insbesondere vollständig umschlossen. Dabei liegt das Heizelement beim Umschlie-ßen über dessen Umfang insbesondere an mindestens vier voneinander beabstandeten Stellen an, bzgl. derer insbesondere oben Ausgeführtes gilt.

Gelöst wird die Aufgabe auch durch eine Verwendung mindestens eines, insbesondere induktiv und/oder resistiv, heizbaren Heizelements zum Verschließen eines thermoplastischen Schlauchs gemäß Anspruch 15.

Dabei wird der Schlauch zu mindestens 75% seines Umfangs, insbesondere vollständig umschlossen. Dabei liegt das Heizelement beim Umschließen über dessen Umfang an mindestens vier voneinander beabstandeten Stellen an, bzgl. derer insbesondere oben Ausgeführtes gilt. Bezüglich des Umschließens gilt insbesondere oben zum Schlauchheizer und/oder dem Verfahren Ausgeführtes.

Die Reduzierung der Shore Härte ist in dieser Schrift insbesondere bezogen auf den Zustand vor dem Heizen und/oder bei 20°C zu bestimmen.

Insbesondere erfolgt das Zusammendrücken des Schlauchs unmittelbar angrenzend an das mindestens eine Heizelement, insbesondere mit einem Abstand von weniger als 5 mm und/oder mittels Zusammendrücken des Heizelements. Insbesondere ist/wird der Abschnitt des thermoplastischen Schlauchs mit zwei, insbesondere induktiv und/oder resistiv, heizbaren Heizelementen, die benachbart zueinander mit einem Abstand im Bereich von 0,2mm bis 5mm, insbesondere mit einem dazwischen liegenden Spalt, auf dem Schlauch angeordnet sind und/oder werden, umschlossen und werden beide Heizelemente, insbesondere induktiv und/oder resistiv, geheizt und/oder werden beide Heizelemente zusammengedrückt, insbesondere gleichzeitig. Insbesondere wird der Schlauch zwischen den Heizelementen durchtrennt, insbesondere mit einer Klinge, die insbesondere, insbesondere induktiv und/oder resistiv, geheizt wird.

Das Zusammendrücken erfolgt insbesondere mit einer Kraft im Bereich von 10 N bis 1 kN.

Gelöst wird die Aufgabe insbesondere durch ein Schlauchverschließsystem gemäß Anspruch 13.

Insbesondere ist der Schlauchverschließvorrichtungsaktuator eingerichtet, einen erfindungsgemäßen Schlauch zu verschließen. Insbesondere erfolgt die Verwendung und/oder das Verfahren mit einem erfindungsgemäßen Schlauch, Schlauchheizer und/oder Schlauchverschließvorrichtungsaktuator.

Mit besonderem Vorteil ist der Schlauchheizer geeignet mit dem Schlauchverschließvorrichtungsaktuator zusammen und/oder platt gedrückt zu werden. Mit besonderem Vorteil ist der Schlauchverschließvorrichtungsaktuator eingerichtet, den Schlauchheizer zusammen und/oder platt zu drücken. Mit besonderem Vorteil ist der Schlauchheizer und/oder Schlauchverschließvorrichtungsaktuator eingerichtet zur Durchführung des erfindungsgemäßen Verfahrens und/oder für die erfindungsgemäße Verwendung. Mit Vorteil wird das erfindungsgemäße Verfahren und/oder die erfindungsgemäße Verwendung mit dem erfindungsgemäßen Schlauchheizer und/oder dem erfindungsgemäßen Schlauchverschließvorrichtungsaktuator durchgeführt.

Der Schlauchheizer und/oder Schlauch sollten ausschließlich aus "Single-Use" Material bestehen.

Unter "Single-Use"-Material wird in dieser Schrift ein Material oder eine Materialmischung verstanden, die bei einer Entsorgung, insbesondere Deponierung und/oder Verbrennung, insbesondere bei Verbrennung bei Temperaturen im Bereich von 800-1150°C, insbesondere 800°C und 900°C, und/oder bei der Wirbelschichtfeuerung und/oder Rostfeuerung, keine gefährlichen Nebenprodukte oder Emissionen freigeben und entweder Rückstandslos verbrennen und/oder zerfallen oder nur Rückstände hinterlassen, die unbedenklich für Mensch und Umwelt sind und/oder solche die die Anforderungen der BlmSchG, der BlmSchV und/oder Industrial Emissions Directive 2010/75/EU (Integrated Pollution Prevention and Control) in der zum Anmeldezeitpunkt letzten und/oder gültigen Fassung, insbesondere bei Verbrennung bei Temperaturen im Bereich von 800-1150°C, insbesondere 800°C und 900°C, und/oder bei der Wirbelschichtfeuerung und/oder Rostfeuerung erfüllen. Bevorzugt beinhalten sie keine seltene Elemente oder anders wertvolle Materialien, insbesondere keine Permanentmagnete. Bevorzugt handelt es sich um Kunststoff, Emaille, Keramik, Stahl, Wolframkarbid, Titannitrid, Aluminiumoxid, Metall- und Halbmetall-Nitride, Metall-Carbide, Metall- und Halbmetall-Oxide, Glas- und/oder Kohlenstoffverbundwerkstoff, Glas- und/oder Kohlenstofffasern, Aramid, Aramidharz und/oder Aluminium und Aluminiumlegierungen, Magnesiumlegierungen, bevorzugt um Kunststoff. Als Kunststoff kommt beispielsweise in Betracht Polypropylen, Polyethylen, Polyvinylacetat, Polyethylvinylacetat, PEEK, PET, Polyamide und Polyimide.

Insbesondere ist der Schlauchheizer zum Heizen auf zumindest 300°C ohne zu schmelzen eingerichtet. Insbesondere erfolgt das Heizen des Schlauchs auf nicht mehr als 300°C und/oder nur bis unterhalb der Zersetzungstemperatur des Schlauchs.

Die heizbaren Platten des Heizelements weisen insbesondere eine Dicke im Bereich von 0,2 bis 5 mm und/oder eine Breite und/oder Erstreckung senkrecht zu den Flächennormalen auf aneinander und/oder an die Materialschwächung angrenzenden heizbaren Platten im Bereich von 50% bis 200% des Durchmessers eines Innkreises des umschlossenen Querschnitts und/oder maximal erfindungsgemäß umschließbaren Schlauchs auf.

Mit Vorteil weist das Heizelement, insbesondere umlaufend, insbesondere um die gegeneinander bewegbaren, insbesondere induktiv und/oder resistiv, heizbaren Bereiche und/oder außerhalb des umschlossenen Querschnitts, eine thermische Isolation, insbesondere in Form von keramischen Elementen, Elementen aus Kunststoff und/oder Glas, insbesondere Isolationsplatten, insbesondere eine pro Bereich und/oder heizbare Platte, auf. Die thermische Isolation ist dabei insbesondere nicht induktiv und/oder resistiv heizbar und insbesondere derart beschaffen, dass sie das induktive und/oder resistive Heizen des Heizelements nicht oder nur vernachlässigbar erschwert. Sie ist insbesondere nicht leitend und/oder nicht magnetisch. Sie ist insbesondere bis mindestens 300°C fest und nicht entflammbar. Sie ist insbesondere so beschaffen, dass sie der zum Zusammendrücken notwendigen Kraft, insbesondere von bis zu 1 kN, Stand hält. Die Isolation ist insbesondere so ausgebildet, dass sie in Richtung senkrecht zur Ebene des umschlossenen Querschnitts und/oder senkrecht zu den Flächennormalen auf den heizbaren Platten über die heizbaren Platten übersteht, insbesondere um eine Länge im Bereich von mindestens 5% und/oder im Bereich bis maximal 25% der Erstreckung der heizbaren Platten und/oder der Isolation in diese Richtung.

Mit besonderem Vorteil ist das, insbesondere induktiv und/oder resistiv, heizbare Heizelement an mindestens der Hälfte des Umfangs des Querschnitts nur einlagig um den von ihm umschlossenen Querschnitt angeordnet und/oder maximal eineinhalbmal um den von ihm umschlossenen Querschnitt gewunden. Dadurch lässt sich die Heizung effizient und das Aufsetzten auf den Schlauch einfach gestalten.

Mit besonderem Vorteil ist der Schlauchheizer flexibel und/oder mit mindestens drei Gelenken und/oder Materialschwächung ausgebildet und/oder sind die Bereiche jeweils steif ausgebildet. Bevorzugt werden steife Bereiche mit dazwischenliegenden Materialschwächungen als Gelenke. Dies ermöglich ein besonders zuverlässiges Verschließen beim Zusammendrücken, insbesondere wenn die Kraft nur an wenigen Stellen angreift und ein Zusammenhalten auch nach Entfernen der Krafteinwirkung gesichert wird. Insbesondere ist das Heizelement so ausgebildet, dass die Verringerung des Querschnitts durch Veränderung der Anstellwinkel von benachbarten, insbesondere aller benachbarten, insbesondere induktiv und/oder resistiv, heizbare Bereichen über die Gelenke und/oder Materialschwächungen erfolgen kann.

Mit besonderem Vorteil für den Verschluss des Schlauches ist das mindestens eine Heizelement umlaufend ausgebildet, also in sich ringförmig geschlossen oder zu einem solchen Ringschluss eingerichtet. Dies kann durch Verbinden zweier Enden des Heizelements erfolgen. Die Verbindung kann beispielsweise formschlüssig oder durch verquetschen, verschmelzen und/oder durch Klemmen erfolgen. Mit besonderem Vorteil ist das mindestens eine Heizelement öffnen- und/oder veschließbar ausgebildet.

In einer Ausgestaltung kann der Schlauchheizer mindestens zwei miteinander, insbesondere beidseitig, verbindbare Heizelemente aufweisen. Dies ermöglicht ein einfaches Aufsetzen auf den Schlauch von zwei Seiten.

Insbesondere, wenn die Reduzierung des Querschnitts durch Zug erfolgen soll, kann das mindestens eine Heizelement mindestens zwei mechanische Angriffspunkte an zwei voneinander beabstandeten, insbesondere einander gegenüberliegenden, Stellen aufweisen, die so angeordnet sind, dass ein Auseinanderziehen der Angriffspunkte eine Reduzierung des umschlossenen Querschnitts bewirkt.

Mit besonderem Vorteil weist das mindestens eine Heizelement und/oder weisen seine Bereiche und/oder heizbaren Platten, eine spezifische Wärmekapazität von weniger als 1000 J/K/kg auf. Dies ermöglich eine schnelle Verfahrensführung mit geringem Verletzungsrisiko.

Mit besonderem Vorteil ist/sind der Schlauchheizer, insbesondere Heizelement und/oder Isolation, ausgebildet, durchtrennt zu werden. Insbesondere ist/sind er/sie zweiteilig mit einem dazwischen liegenden Spalt ausgebildet, wobei die Trennung insbesondere parallel zur Querschnittsebene erfolgt. Insbesondere kann der Schlauchheizer aus zwei identischen Elementen bestehen, zwischen denen insbesondere ein Spalt im Bereich von 0,2 bis 5 mm vorhanden ist und/oder die mit einem solchen Spalt auf dem Schlauch angeordnet werden/sind. Dies ermöglicht das Durchtrennen zwischen diesen Elementen, beispielsweise mittels eines Messers/Klinge. Es kann eine Verbindung zwischen diesen Elementen bestehen, die mit durchtrennt werden kann. Diese Verbindung ist aber insbesondere so ausgebildet, dass sie mittels einer Klinge leichter zu durchtrennen ist als Heizelement und/oder Isolation, insbesondere beidseits des Spalts. Ein Verwenden von Elementen beidseits der Trennung des Schlauchs fördert die Stabilität der Versiegelung bis zur vollständigen Auskühlung beider Schlauchteile.

Erfindungsgemäß und mit besonderem Vorteil für die Stabilität der Versiegelung bis zur vollständigen Auskühlung des Schlauchs/der Schlauchteile ist der Schlauchheizer, insbesondere jede seiner zur Trennung vorgesehenen Hälften/Elemente so ausgebildet, seine im Querschnitt reduzierte Form und/oder den reduzierten Querschnitt zumindest gegen ihn auseinander drückende Kraft von 1 N insofern beizubehalten, als dass sich der umschlossene reduzierte Querschnitt nicht um mehr als 10% erhöht, bevorzugt im Wesentlichen und/oder vollständig beizubehalten. Die 10% sind dabei insbesondere ausgehend vom reduzierten Querschnitt zu beurteilen. Dabei wird die Kraft insbesondere durch den zusammengedrückten Schlauch ausgeübt.

Mit besonderem Vorteil für die Stabilität der Versiegelung bis zur vollständigen Auskühlung des Schlauchs/der Schlauchteile wird das Verfahren so geführt, dass die durch das Zusammendrücken bewirkte Verringerung des Querschnitts des Schlauchs zumindest bis zum vollständigen Abkühlen beibehalten wird, als dass sich der umschlossene reduzierte Querschnitt nicht um mehr als 10% erhöht, bevorzugt im Wesentlichen und/oder vollständig beibehalten wird Insbesondere erfolgt dies durch den Schlauchheizer und/oder das mindestens eine Heizelement, insbesondere indem dieser/dieses so ausgeführt ist, dass zumindest gegen ihn/es auseinander drückende Kraft von 1 N den reduzierten Querschnitt des Schlauchs insofern beizubehalten, als dass sich der umschlossene reduzierte Querschnitt des Schlauch nicht um mehr als 10% erhöht, bevorzugt im Wesentlichen und/oder vollständig beibehalten wird. Die 10% sind dabei insbesondere ausgehend vom reduzierten Querschnitt zu beurteilen. Dabei wird die Kraft insbesondere durch den zusammengedrückten Schlauch ausgeübt.

Mit besonderem Vorteil weist/en der Schlauchheizer, insbesondere die heizbaren Platten und/oder Hälften/Elemente, mindestens ein Loch und/oder Aussparung, insbesondere Löcher und/oder Aussparungen, auf, die eingerichtet ist/sind, beim Zusammendrücken thermoplastisches Material passieren zu lassen. So kann und wird mit Vorteil der Schlauchheizer beim Zusammendrücken teilweise in den Schlauch gedrückt bzw. Schlauchmaterial durch ihn hindurchgepresst. Dadurch kann der Schlauchheizer fest mit dem Schlauch verbunden werden und seine stabilisierende Wirkung weiter erhöht werden.

Insbesondere sind die Mittel zum Verformen des Schlauchverschließvorrichtungsaktuator durch mindestens einen Pneumatik- und/oder Hydraulikzylinder, und/oder mindestens eine Manschette zum Einpressen von Druckluft und/oder Fluid und/oder einen Servo- oder Elektromotor und/oder eine Übersetzung, insbesondere zur Betätigung mit der Hand, gebildet.

Insbesondere ist der Schlauchverschließvorrichtungsaktuator eingerichtet de mindestens eine Heizvorrichtung zu bewegen, insbesondere ist er eingerichtet die mindestens eine Heizvorrichtung, insbesondere alle Heizvorrichtungen, mit den, insbesondere induktiv und/oder resistiv, heizbaren Bereichen und/oder mit den Mittel zum Verformen zusammen zu bewegen und/oder den von ihnen umschlossenen Querschnitt reversibel zu verringern.

Mit Vorteil weist der Schlauchverschließvorrichtungsaktuator eine Schneidvorrichtung zum Durchtrennen eines Schlauchs und/oder mindestens einen Temperaturfühler zur Messung der Temperatur des Schlauchs und/oder Heizelements auf.

Mit Vorteil sind Mittel zum Verformen und mindestens eine Induktionsspule in einem einteiligen Schlauchverschließvorrichtungsaktuator angeordnet. Sie können aber auch in voneinander trennbaren Einheiten angeordnet sein, wobei der Schlauchverschließvorrichtungsaktuator insbesondere eingerichtet ist, diese Einheiten fest miteinander zu verbinden.

Mit Vorteil ist der Schlauchverschließvorrichtungsaktuator mit einem Versorgungsteil und einem Aktorteil und dazwischen liegender, insbesondere flexibler, Verbindung ausgeführt. Dabei beinhaltet das Versorgungsteil insbesondere die Stromversorgung und/oder das Aktorteil insbesondere Mittel zum Verformen und die Heizvorrichtung(en) und/oder Induktionsspule(n) und ist es insbesondere als Zange und/oder mit zwei Backen ausgebildet. Insbesondere weist der Schlauchverschließvorrichtungsaktuator und insbesondere sein Aktorteil ein Gelenk auf, an dem zwei Backen und/oder Schenkel angeordnet sind, die insbesondere beide mindestens eine Heizvorrichtung und/oder Induktionsspule(n) aufweisen. Die Backen/Schenkel weisen insbesondere jeder mit dieser zum Bewegen der Backen/Schenkel verbundene und auf der gegenüberliegenden Seite des Gelenks angeordnete Griffe und/oder einen Verriegelungsmechanismus zur Verhinderung der relativen Bewegung der Backen/Schenkel gegeneinander auf. In alternativen Ausführungsformen kann es bevorzugt sein, wenn der Schlauchverschließvorrichtungsaktuator und insbesondere sein Aktorteil zweiteilig ausgeführt ist, wobei die Teile steif und reversibel miteinander verbindbar und reversibel voneinander trennbar ausgeführt sind und beide jeweils Mittel zum Verformen und mindestens eine Heizvorrichtung und/oder Induktionsspule(n) aufweisen. In alternativen Ausführungsformen kann es bevorzugt sein, wenn der Schlauchverschließvorrichtungsaktuator und insbesondere sein Aktorteil C-förmig oder U-förmig ausgeführt ist, wobei beide gegenüberliegenden Endabschnitte jeweils Mittel zum Verformen und mindestens eine Heizvorrichtung und/oder Induktionsspule(n) aufweisen. Es kann zudem ein Verschluss vorgesehen sein, der eingerichtet ist, die Öffnung der C-Form oder der U-Form zu verschließen und/oder in eine rechteck- oder O-Form zu bringen.

Bevorzugt ist/sind der Schlauchverschließvorrichtungsaktuator und/oder sein Aktorteil mindestens IP68 konform und/oder ist es/sind sie so ausgebildet, dass sie keine Partikel abgeben und/oder keinen Ventilator aufweisen und/oder keinen Luftstrom abgeben und/oder erzeugen.

Insbesondere ist der Schlauchverschließvorrichtungsaktuator eingerichtet, alle Schläuche mit Außendurchmessern in mindestens einem Fünftel der Spanne von 3 mm bis 45 mm, insbesondere mit darum angeordnetem Heizelement, insbesondere erfindungsgemäßem Schlauchheizer, zu umschließen.

Eine mögliche Ausführungsform der Erfindung soll im Folgenden rein schematisch und nicht beschränkend anhand der folgenden Figuren erläutert werden.

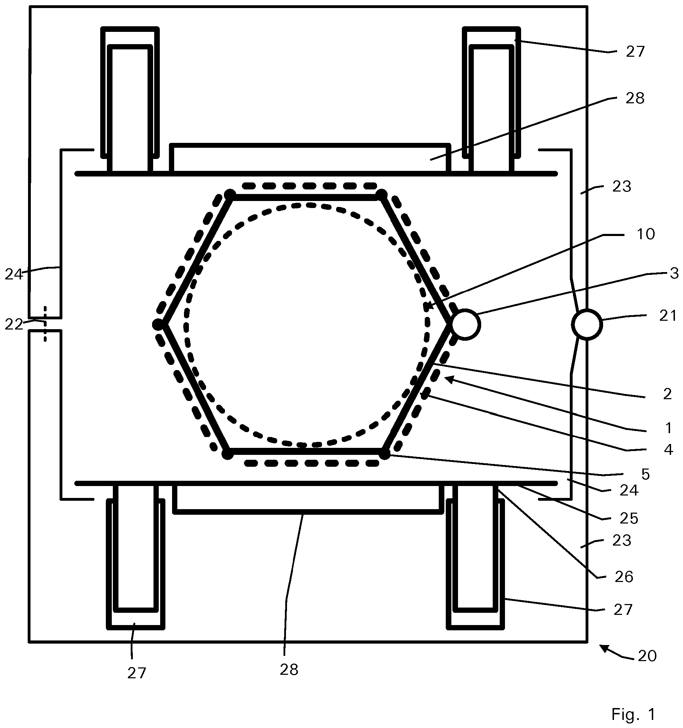

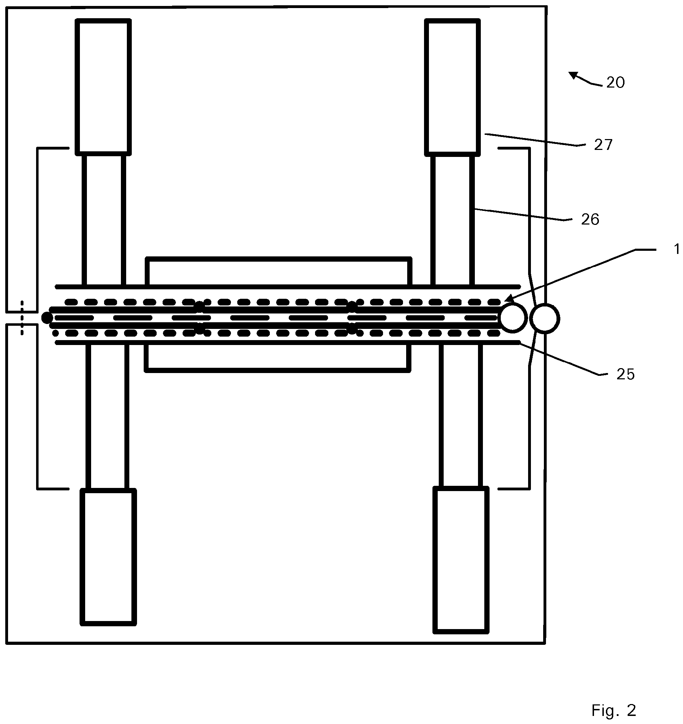

Figuren 1 und 2 zeigen je einen Schnitt durch einen Sealer 20, auch Schlauchverschließvorrichtungsaktuator. In Figur 1 ist der Sealer um einen unverschlossenen Schlauch 10 angeordnet. Um den Schlauch 10 ist ein Schlauchheizer angeordnet. Der Schlauchheizer weist 3 induktiv und/oder resistiv heizbare Platten 2 auf, die aus einem Aluminiumstreifen durch Einbringung von Materialschwächungen als Scharniere 5 gefertigt wurden. Sie sind mit einem Verbinder 3 zu einem umlaufenden Ring verquetscht. Um sie ist eine thermische Isolation aus sechs keramischen Isolationsplatten 4 angeordnet. Die Heizplatten liegen an sechs gleichmäßig über den Umfang des Schlauchs verteilten Punkten an diesem an und umschließen ihn vollständig.

Der Sealer 20 ist mit zwei Backen oder Sealerschenkeln 23 und einem dazwischen liegenden Sealerscharnier 21 ausgebildet. Er weist einen dem Sealerscharnier 21 gegenüberliegenden Verschluss 22 auf. Jeder Schenkel weist eine in Führungen 24 laufende Druckplatte 25 auf, die über zwei Stempel 26 je eines Pneumatikzylinders 27 bewegt werden kann, auf. Mit der Druckplatte 25 verbunden ist eine Induktionsspulenanordnung 28.

Nachdem der Schlauch 10 mit darum liegendem Schlauchheizer 1 aufgenommen und der Verschluss 22 verschlossen wurde, werden die Druckplatten 25 mittels der Pneumatikzylinder 27 und deren Stempel 26 in Kontakt mit den oben und unten liegenden Isolationsplatten 4 gebracht und die Heizplatten 2 mittels der Induktionsspulenanordnungen 28 geheizt. Nach Erweichen des Schlauchs 10 mittels Erwärmung durch die Heizplatten 2 werden die Druckplatten 25 mittels der Pneumatikzylinder 27 und deren Stempel 26 zusammen mit den Induktionsspulenanordnungen 28 aufeinander zubewegt und der Schlauchheizer 1 bei weiterer induktiver Heizung zusammengedrückt und dadurch der Schlauch 10 verschlossen. Dies ist in Figur 2 zu erkennen. Hier wurde der Schlauch 10 platt gedrückt. Nun kann der Verschluss 22 geöffnet werden und können die Sealerschenkel 23 auseinander geklappt und der Sealer 20 entfernt werden. Der Schlauchheizer 1 stabilisiert dabei den noch warmen Schlauch 10 bis zur vollständigen Abkühlung.

### Bezugszeichenliste

- 1: Schlauchheizer
- 2: induktiv heizbare Heizplatte
- 3: Verbinder
- 4: Isolationsplatte
- 5: Scharnier

- 10: Schlauch

- 20: Sealer
- 21: Sealerscharnier
- 22: Verschluss
- 23: Sealerschenkel
- 24: Führung
- 25: Druckplatte
- 26: Stempel
- 27: Pneumatikzylinder
- 28: Induktionsspulenanordnung

## Patentansprüche

1. Schlauchheizer (1), insbesondere zum Verschließen von thermoplastischen Schläuchen und/oder Rohren, insbesondere Schläuchen aus thermoplastischem Elastomer, aufweisend mindestens ein, insbesondere induktiv, heizbares Heizelement, wobei das Heizelement mindestens vier, insbesondere mehr als sechs, gegeneinander bewegbare, insbesondere elektrisch, induktiv und/oder resistiv heizbare Bereiche (2) aufweist und das Heizelement eingerichtet ist, von einer Richtung senkrecht zur Längserstreckung auf einen Schlauch (10) mit einem Außendurchmesser aufgesetzt zu werden und diesen an diesem über dessen Umfang an mindestens vier voneinander beabstandeten Stellen anliegend zu mindestens 75% seines Umfangs zu umschließen und wobei das Heizelement so verformbar ausgebildet ist, dass ein von ihm umschlossener Querschnitt durch Zusammendrücken und/oder -ziehen des Heizelements um mindestens 30%, insbesondere um mehr als 50%, verringert und/oder in seiner Erstreckung in eine Richtung des Querschnitts um mindestens 30%, insbesondere mehr als 50% verringert werden kann, wobei die gegeneinander bewegbaren, insbesondere elektrisch, induktiv und/oder resistiv heizbaren Bereiche (2) durch, insbesondere jeweils ein, plattenförmige(s) Element(e) gebildet werden und insbesondere zwischen mindestens zwei Paaren aneinander angrenzender plattenförmiger Elemente jeweils ein Gelenk und/oder eine Materialschwächung vorhanden ist, die ein Ändern des Winkels der plattenförmigen Elemente des jeweiligen Paars zueinander erlauben, **dadurch gekennzeichnet, dass** der Außendurchmesser des Schlauchs, auf den das Heizelement eingerichtet ist, aufgesetzt zu werden, im Bereich von 3 mm bis 45 mm liegt und dass der Schlauchheizer ausgebildet ist, den verringerten umschlossenen Querschnitt zumindest gegen den Schlauchheizer auseinander drückende Kraft von 1 N zumindest insofern beizubehalten, als dass sich der verringerte umschlossene Querschnitt nicht um mehr als 10% erhöht.

2. Schlauchheizer nach Anspruch 1, wobei das Heizelement, insbesondere umlaufend, insbesondere um die gegeneinander bewegbaren insbesondere elektrisch, induktiv und/oder resistiv heizbaren Bereiche (2), eine thermische Isolation, insbesondere in Form von keramischen Elementen, Elementen aus Kunststoff und/oder Glas, insbesondere Isolationsplatten, insbesondere eine pro Bereich und/oder Platte, aufweist.

3. Schlauchheizer nach einem der vorstehenden Ansprüche, wobei das, insbesondere elektrisch, induktiv und/oder resistiv, heizbare Heizelement an mindestens der Hälfte des Umfangs des Querschnitts nur einlagig um den von ihm umschlossenen Querschnitt angeordnet ist und/oder maximal eineinhalbmal um den von ihm umschlossenen Querschnitt gewunden ist.

4. Schlauchheizer nach einem der vorstehenden Ansprüche, wobei der Schlauchheizer flexibel und/oder mit mindestens drei Gelenken und/oder Materialschwächung ausgebildet ist und/oder die Bereiche jeweils steif ausgebildet sind und/oder wobei das Heizelement so ausgebildet ist, dass die Verringerung des Querschnitts durch Veränderung der Anstellwinkel von benachbarten, insbesondere aller benachbarten, insbesondere elektrisch, induktiv und/oder resistiv, heizbaren Bereichen über die Gelenke und/oder Materialschwächungen erfolgen kann.

5. Schlauchheizer nach einem der vorstehenden Ansprüche, wobei das mindestens eine Heizelement und/oder seine Bereiche und/oder heizbare Platten, eine spezifische Wärmekapazität von weniger als 1000 J/K/kg aufweisen.

6. Schlauchheizer nach einem der vorstehenden Ansprüche, wobei der Schlauchheizer, insbesondere Heizelement und/oder Isolation, ausgebildet ist, durchtrennt zu werden, insbesondere zweiteilig mit einem dazwischen liegenden Spalt ausgebildet ist, wobei die Trennung insbesondere parallel zur Querschnittsebene erfolgt.

7. Schlauchheizer nach einem der vorstehenden Ansprüche, wobei jede der zur Trennung vorgesehene Hälfte ausgebildet ist, seine im Querschnitt reduzierte Form zumindest gegen ihn auseinander drückend Kraft von 1 N beizubehalten.

8. Schlauchheizer nach einem der vorstehenden Ansprüche, wobei der Schlauchheizer, insbesondere die heizbaren Platten, Löcher und/oder Aussparungen aufweisen, die eingerichtet sind, beim Zusammendrücken thermoplastisches Material passieren zu lassen.

9. Thermoplastischer Schlauch, insbesondere Schlauch aus thermoplastischem Elastomer, aufweisend mindestens ein Heizelement, ausgebildet als mindestens eine, insbesondere elektrisch, induktiv und/oder resistiv, heizbare Spange und/oder mindestens einen, insbesondere elektrisch, induktiv und/oder resistiv, heizbaren Ring, die/der den Schlauch umschließt, wobei der Ring und/oder die Spange den Schlauch an diesem über dessen Umfang an mindestens vier voneinander beabstandeten Stellen anliegend zu mindestens 75% seines Umfangs umschließt und wobei das Heizelement so verformbar ausgebildet ist, dass ein von ihm umschlossener Querschnitt durch Zusammendrücken und/oder -ziehen des Heizelements um mindestens 30%, insbesondere um mehr als 50%, verringert und/oder in seiner Erstreckung in eine Richtung des Querschnitts um mindestens 30%, insbesondere mehr als 50% verringert werden kann, wobei gegeneinander bewegbaren, insbesondere elektrisch, induktiv und/oder resistiv heizbaren Bereiche (2) durch, insbesondere jeweils ein, plattenförmige(s) Element(e) gebildet werden und zwischen mindestens zwei Paaren aneinander angrenzender plattenförmiger Elemente jeweils ein Gelenk und/oder eine Materialschwächung vorhanden ist, die ein Ändern des Winkels der plattenförmigen Elemente des jeweiligen Paars zueinander erlauben, **dadurch gekennzeichnet, dass** das Heizelement ausgebildet ist, den verringerten umschlossenen Querschnitt zumindest gegen das Heizelement auseinander drückende Kraft von 1 N zumindest insofern beizubehalten, als dass sich der verringerte umschlossene Querschnitt nicht um mehr als 10% erhöht.

10. Schlauchverschließvorrichtungsaktuator aufweisend Mittel zum Aufnehmen eines Schlauchheizers aufweisend mindestens ein, insbesondere elektrisch, induktiv und/oder resistiv, heizbares Heizelement, wobei das Heizelement mindestens vier, insbesondere mindestens sechs, gegeneinander bewegbare, insbesondere elektrisch, induktiv und/oder resistiv, heizbare Bereiche (2) aufweist und das Heizelement eingerichtet ist, einen Schlauch (10) mit einem Außendurchmesser im Bereich von 3 mm bis 45 mm, an diesem über dessen Umfang an mindestens vier voneinander beabstandeten Stellen anliegend zu umschließen und wobei das Heizelement so, insbesondere nicht-reversibel und/oder nicht elastisch, verformbar ausgebildet ist, dass ein von ihm umschlossenen Querschnitt um mindestens 30%, insbesondere mindestens 50%, verringert und/oder platt gedrückt werden kann, insbesondere nach einem der vorstehenden Ansprüche 1 bis 8 mit darin aufgenommenem Schlauch und Mittel, insbesondere mittels mindestens einen Hydraulik- und/oder Pneumatikzylinder umfassend, eingerichtet zum Verformen des aufgenommenen Schlauchheizers so, dass der von ihm umschlossenen Querschnitt um mindestens 30%, insbesondere um mehr als 50%, verringert wird, wobei der Schlauchverschließvorrichtungsaktuator mindestens ein Mittel zum Bewirken eines induktiven und/oder resistiven Heizens des Heizelements, insbesondere mindestens eine Induktionsspule zum induktiven und/oder eine Heizvorrichtung zum resistiven Heizen des Heizelements, aufweist **dadurch gekennzeichnet, dass** der Schlauchverschließvorrichtungsaktuator
a. ein Gelenk aufweist, an dem zwei Backen und/oder Schenkel angeordnet sind, die beide mindestens eine Heizvorrichtung und/oder Induktionsspule(n) aufweisen, oder
b. zweiteilig ausgeführt ist, wobei die zwei Teile steif und reversibel miteinander verbindbar ausgeführt sind und jeweils Mittel zum Verformen und mindestens eine Heizvorrichtung und/oder Induktionsspule(n) aufweisen oder
c. C-förmig oder U-förmig ausgebildet ist, wobei gegenüberlegende Endabschnitte jeweils Mittel zum Verformen und mindestens eine Heizvorrichtung und/oder Induktionsspule(n) aufweisen.

11. Schlauchverschließvorrichtungsaktuator, insbesondere in Form einer Zange und/oder zwei mit einem Scharnier verbundenen Backen, zum Verschließen von thermoplastischen Schläuchen, insbesondere Schläuchen aus thermoplastischem Elastomer, aufweisend mindestens ein, insbesondere elektrisch, induktiv und/oder resistiv, heizbares Heizelement, wobei das mindestens eine Heizelement mindestens vier, insbesondere mindestens sechs, gegeneinander bewegbare heizbare Bereiche aufweist und das Heizelement eingerichtet ist, von einer Richtung senkrecht zur Längserstreckung auf einen Schlauch (10) mit einem Außendurchmesser im Bereich von 3 mm bis 45 mm, aufgesetzt zu werden und diesen an diesem über dessen Umfang an mindestens vier voneinander beabstandeten Stellen anliegend zu mindestens 75% seines Umfangs zu umschließen und wobei der Schlauchverschließvorrichtungsaktuator eingerichtet ist, das mindestens eine Heizelement, insbesondere mittels mindestens eines Hydraulik- und/oder Pneumatikzylinders, so zu bewegen, dass ein von ihm umschlossener Querschnitt, insbesondere eines thermoplastischer Schlauchs, um mindestens 30%, insbesondere um mehr als 50%, verringert und/oder in seiner Erstreckung in eine Richtung des Querschnitts um mindestens 30%, insbesondere um mehr als 50% verringert werden kann, wobei der Schlauchverschließvorrichtungsaktuator insbesondere mindestens eine Induktionsspule zum elektrischen, induktiven Heizen und/oder eine Heizvorrichtung zum resistiven Heizen des Heizelements aufweist.

12. Schlauchverschließvorrichtungsaktuator nach dem vorstehenden Anspruch 10 oder 11 aufweisend mindestens eine Schneidvorrichtung zum Durchtrennen eines Schlauchs und/oder mindestens einen Temperaturfühler.

13. Schlauchverschließsystem aufweisend mindestens einen, insbesondere eine Mehrzahl unterschiedlicher Innendurchmesser aufweisende, Schlauchheizer nach einem der vorstehenden Ansprüche 1 bis 8 und/oder mindestens einen Schlauch, insbesondere eine Mehrzahl unterschiedlicher Innendurchmesser aufweisende Schläuche, nach dem vorstehenden Anspruch 9 und mindestens einen, insbesondere genau einen Schlauchverschließvorrichtungsaktuator nach dem vorstehenden Anspruch 10, 11 oder 12.

14. Verfahren zum Verschließen eines thermoplastischen Schlauchs, insbesondere Schlauch aus thermoplastischem Elastomer, insbesondere nach Anspruch 9, umfassend die folgenden Schritte:
- zumindest teilweises Umschließen eines Abschnitts des Schlauchs mit mindesten einem, insbesondere elektrisch, induktiv und/oder resistiv, heizbaren Heizelement und/oder Verwenden eines thermoplastischen Schlauchs mit einem diesen umschließenden, insbesondere elektrisch, induktiv und/oder resistiv, heizbaren Heizelement, wobei das Heizelement an dem Umfang des Schlauchs zumindest teilweise anliegt, und Umschließen des Schlauchs und/oder des Heizelements an mindestens zwei einander gegenüberliegenden Seiten an dem und/oder angrenzend an den Abschnitt des Schlauchs mit einem Mittel zum Zusammendrücken des Schlauchs, insbesondere nach einem der vorstehenden Ansprüche 10 bis 12 und **gekennzeichnet durch** Heizen des Heizelements und Heizen des Schlauchs mit dem geheizten Heizelement, insbesondere bis zumindest am Umfang, insbesondere über die gesamte Dicke der Schlauchwandung, die Shore A Härte des Abschnitt um mindestens 30% reduziert ist und/oder zumindest am Umfang, insbesondere über die gesamte Dicke der Schlauchwandung, die Glastemperatur und/oder Glasübergangstemperatur erreicht ist,
- Zusammendrücken des Schlauchs mit dem Mittel zum Zusammendrücken des Schlauchs, insbesondere während das Heizen des Heizelements und/oder das Heizen des Abschnitts mit dem geheizten Heizelement fortgesetzt wird und
- Entfernen des Mittels zum Zusammendrücken und insbesondere auch des Heizelements.

15. Verwendung mindestens eines, insbesondere elektrisch, induktiv und/oder resistiv heizbaren Heizelements zum Verschließen eines thermoplastischen Schlauchs, insbesondere Schlauch aus thermoplastischem Elastomer, insbesondere nach Anspruch 9, wobei ein Abschnitt des thermoplastischen Schlauchs mit dem mindestens einen, insbesondere elektrisch, induktiv und/oder resistiv, heizbaren Heizelement umschlossen ist und/oder wird und **dadurch gekennzeichnet, dass** das mindestens eine Heizelement geheizt wird und damit der Abschnitt geheizt wird, insbesondere bis zumindest am Umfang, insbesondere über die gesamte Dicke der Schlauchwandung, die Shore A Härte des Abschnitt um mindestens 30% reduziert ist und/oder zumindest am Umfang, insbesondere über die gesamte Dicke der Schlauchwandung, die Glastemperatur und/oder Glasübergangstemperatur erreicht ist, und Zusammendrücken des Schlauchs im und/oder angrenzend an den Abschnitt, insbesondere während das Heizen des Heizelements und/oder das Heizen des Abschnitts mit dem geheizten Heizelement fortgesetzt wird.

## Claims

1. A hose heater (1), in particular for sealing thermoplastic hoses and/or pipes, in particular hoses made of thermoplastic elastomer, having at least one heating element which can be heated, in particular inductively, the heating element having at least four, in particular more than six, mutually movable, in particular electrically, inductively and/or resistively heatable regions (2), and the heating element is arranged to be placed from a direction perpendicular to the longitudinal extension on a hose (10) having an outer diameter and to enclose the latter over its circumference at at least four spaced-apart points, bearing against at least 75% of its circumference, and wherein the heating element is designed to be deformable in this way, that a cross-section enclosed by it can be reduced by at least 30%, in particular by more than 50%, by compressing and/or drawing the heating element and/or can be reduced in its extension in one direction of the cross-section by at least 30%, in particular by more than 50%, wherein the mutually movable, in particular electrically, inductively and/or resistively heatable regions (2) are formed by, in particular in each case one, plate-shaped element(s) and, in particular, between at least two pairs of mutually adjacent plate-shaped elements there is in each case a joint and/or a material weakening which allow the angle of the plate-shaped elements of the respective pair to be changed with respect to one another, **characterised in that** the outer diameter of the hose onto which the heating element is adapted to be placed is in the range of 3 mm to 45 mm and **in that** the hose heater is adapted to maintain the reduced enclosed cross-section at least against a force of 1 N pushing the hose heater apart at least to the extent that the reduced enclosed cross-section does not increase by more than 10%.

2. A hose heater according to claim 1, wherein the heating element has, in particular circumferentially, in particular around the mutually movable, in particular electrically, inductively and/or resistively heatable regions (2), a thermal insulation, in particular in the form of ceramic elements, elements made of plastic and/or glass, in particular insulation plates, in particular one per region and/or plate.

3. A hose heater according to one of the preceding claims, wherein the heating element, which can be heated, in particular electrically, inductively and/or resistively, is arranged on at least half of the circumference of the cross-section in only one layer around the cross-section enclosed by it and/or is wound a maximum of one and a half times around the cross-section enclosed by it.

4. A hose heater according to one of the preceding claims, wherein the hose heater is designed flexibly and/or with at least three joints and/or material weakening and/or the regions are each designed rigidly and/or wherein the heating element is designed in such a way that the reduction of the cross-section can be effected by changing the angles of attack of adjacent, in particular all adjacent, in particular electrically, inductively and/or resistively, heatable regions via the joints and/or material weakenings.

5. A hose heater according to any one of the preceding claims, wherein said at least one heating element and/or its portions and/or heatable plates, have a specific heat capacity of less than 1000 J/K/kg.

6. A hose heater according to one of the preceding claims, wherein the hose heater, in particular heating element and/or insulation, is designed to be cut through, in particular is designed in two parts with a gap lying therebetween, wherein the separation takes place in particular parallel to the cross-sectional plane.

7. A hose heater according to any one of the preceding claims, wherein each of the halves provided for separation is adapted to maintain its reduced cross-sectional shape at least against it pushing apart force of 1 N.

8. A hose heater according to any one of the preceding claims, wherein the hose heater, in particular the heatable plates, have holes and/or recesses which are arranged to allow thermoplastic material to pass through when compressed.

9. A thermoplastic hose, in particular hose made of thermoplastic elastomer, having at least one heating element, designed as at least one, in particular electrically, inductively and/or resistively heatable clip and/or at least one, in particular electrically, inductively and/or resistively heatable ring which encloses the hose, the ring and/or the clip enclosing at least 75% of the circumference of the hose over the circumference thereof at at least four spaced-apart points, and wherein the heating element is designed to be deformable in such a way that a cross-section enclosed by it can be reduced by at least 30%, in particular by more than 50%, and/or can be reduced in its extension in one direction of the cross-section by at least 30%, in particular by more than 50%, by compressing and/or drawing the heating element, wherein mutually movable, in particular electrically, inductively and/or resistively heatable regions (2) are formed by, in particular in each case one, plate-shaped element(s) and between at least two pairs of mutually adjacent plate-shaped elements there is in each case a joint and/or a material weakening which permit a change in the angle of the plate-shaped elements of the respective pair with respect to one another, **characterised in that** the heating element is adapted to maintain the reduced enclosed cross-section at least against a force of 1 N pushing the heating element apart at least to the extent that the reduced enclosed cross-section does not increase by more than 10%.

10. A hose sealing device actuator comprising means for receiving a hose heater comprising at least one, in particular electrically, inductively and/or resistively, heatable heating element, wherein the heating element comprises at least four, in particular at least six, mutually movable, in particular electrically, inductively and/or resistively, heatable regions (2), heatable regions (2) which can be moved with respect to one another, in particular electrically, inductively and/or resistively, and the heating element being set up to enclose a hose (10) with an external diameter in the range from 3 mm to 45 mm, resting against the latter over its circumference at at least four points which are spaced apart from one another, and the heating element being designed in such a way that it can be deformed, in particular non-reversibly and/or non-elastically, that a cross-section enclosed by it can be reduced and/or flattened by at least 30%, in particular by at least 50%, in particular according to one of the preceding claims 1 to 8 with a hose accommodated therein and means, in particular comprising by means of at least one hydraulic and/or pneumatic cylinder, arranged for deforming the accommodated hose heater in such a way that the cross-section enclosed by it is reduced by at least 30%, in particular by more than 50%, wherein the hose closure device actuator comprises at least one means for effecting inductive and/or resistive heating of the heating element, in particular at least one induction coil for inductive and/or one heating device for resistive heating of the heating element, **characterised in that** the hose closure device actuator comprises at least one induction coil for inductive and/or one heating device for resistive heating of the heating element.
a. has a joint on which two jaws and/or legs are arranged, both of which have at least one heating device and/or induction coil(s), or
b. is made in two parts, the two parts being made rigid and reversibly connectable to each other and each having means for deformation and at least one heating device and/or induction coil(s), or
c. C-shaped or U-shaped, opposite end portions each having means for deformation and at least one heating device and/or induction coil(s).

11. A hose sealing device actuator, in particular in the form of pliers and/or two jaws connected to a hinge, for sealing thermoplastic hoses, in particular hoses made of thermoplastic elastomer, comprising at least one heating element which can be heated, in particular electrically, inductively and/or resistively, wherein said at least one heating element has at least four, in particular at least six, heatable regions which are movable relative to one another, and the heating element is arranged to be placed from a direction perpendicular to the longitudinal extent on a hose (10) having an external diameter in the range from 3 mm to 45 mm, and to surround at least 75% of its circumference, bearing against the hose over its circumference at at least four spaced-apart points, and wherein the hose closure device actuator is set up to move said at least one heating element, in particular by means of at least one hydraulic and/or pneumatic cylinder, in such a way that a cross-section enclosed by it, in particular of a thermoplastic hose, can be reduced by at least 30%, in particular by more than 50%, and/or can be reduced in its extension in one direction of the cross section by at least 30%, in particular by more than 50%, the hose closure device actuator having in particular at least one induction coil for electrical, inductive heating and/or a heating device for resistive heating of the heating element.

12. A hose sealing device actuator according to claim 10 or 11, comprising at least one cutting device for cutting a hose and/or at least one temperature sensor.

13. A hose sealing system comprising at least one hose heater, in particular having a plurality of different inner diameters, according to one of the preceding claims 1 to 8 and/or at least one hose, in particular having a plurality of different inner diameters, according to the preceding claim 9 and at least one, in particular exactly one hose sealing device actuator according to the preceding claim 10, 11 or 12.

14. A method for sealing a thermoplastic hose, in particular a hose made of thermosplastic elastomer, in particular according to claim 9, comprising the following steps:
- at least partial enclosure of a section of the hose with at least one, in particular electrically, inductively and/or resistively, heatable heating element and/or use of a thermoplastic hose with a heatable, in particular electrically, inductively and/or resistively, heating element enclosing it, wherein the heating element at least partially abuts the circumference of the hose, and enclosing the hose and/or the heating element on at least two opposite sides at and/or adjacent to the section of the hose with a means for compressing the hose, in particular according to one of the preceding claims 10 to 12 and **characterised by** heating the heating element and heating the hose with the heated heating element, in particular until at least at the circumference, in particular over the entire thickness of the hose wall, the Shore A hardness of the section is reduced by at least 30% and/or at least at the circumference, in particular over the entire thickness of the hose wall, the glass temperature and/or glass transition temperature is reached,
- compressing the hose with the means for compressing the hose, in particular while the heating of the heating element and/or the heating of the section with the heated heating element is continued, and
- removing the means of compression and in particular also the heating element.

15. The use of at least one, in particular electrically, inductively and/or resistively heatable heating element for sealing a thermoplastic hose, in particular a hose made of thermoplastic elastomer, in particular according to claim 9, wherein a section of the thermoplastic hose is and/or is enclosed with said at least one, in particular electrically, inductively and/or resistively heatable heating element, and **characterised in that**, said at least one heating element is heated and thus the section is heated, in particular until at least at the circumference, in particular over the entire thickness of the hose wall, the Shore A hardness of the section is reduced by at least 30% and/or at least at the circumference, in particular over the entire thickness of the hose wall, the glass temperature and/or glass transition temperature is reached, and compressing the hose in and/or adjacent to the section, in particular while the heating of the heating element and/or the heating of the section with the heated heating element is continued.

## Revendications

1. Chauffe-tuyau (1), en particulier pour sceller des tuyaux thermoplastiques et/ou des tuyaux, en particulier des tuyaux en élastomère thermoplastique, comportant au moins un élément chauffant qui peut être chauffé, en particulier par induction, l'élément chauffant comporte au moins quatre, en particulier plus de six, zones chauffantes (2) mutuellement mobiles, en particulier électriques, inductives et/ou résistives, et l'élément chauffant est conçu pour être placé dans une direction perpendiculaire à l'extension longitudinale sur un tuyau (10) ayant un diamètre extérieur et pour entourer ce dernier sur sa circonférence en au moins quatre points espacés, en s'appuyant sur au moins 75 % de sa circonférence, et dans lequel l'élément chauffant est conçu pour être déformable de cette manière, en ce sens qu'une section transversale qu'il renferme peut être réduite d'au moins 30 %, en particulier de plus de 50 %, en comprimant et/ou en étirant l'élément chauffant et/ou peut être réduite dans son extension dans une direction de la section transversale d'au moins 30 %, en particulier de plus de 50 %, dans lequel les zones chauffantes (2) mutuellement mobiles, en particulier de manière électrique, inductive et/ou résistive, sont formées par un ou plusieurs éléments en forme de plaque et, en particulier, entre au moins deux paires d'éléments en forme de plaque mutuellement adjacents, il y a dans chaque cas un joint et/ou un affaiblissement du matériau qui permet de modifier l'angle des éléments en forme de plaque de la paire respective l'un par rapport à l'autre, **caractérisé par le fait que** le diamètre extérieur du tuyau sur lequel l'élément chauffant est destiné à être placé est compris entre 3 mm et 45 mm et **par le fait que** le dispositif de chauffage du tuyau est destiné à maintenir la section fermée réduite au moins contre une force de 1 N qui écarte le dispositif de chauffage du tuyau au moins dans la mesure où la section fermée réduite n'augmente pas de plus de 10 %.

2. Chauffe-tuyau selon la revendication 1, dans lequel l'élément chauffant possède, en particulier sur la circonférence, en particulier autour des zones (2) chauffables mutuellement, en particulier de manière électrique, inductive et/ou résistive, une isolation thermique, en particulier sous forme d'éléments céramiques, d'éléments en plastique et/ou en verre, en particulier de plaques d'isolation, en particulier une par zone et/ou par plaque.

3. Chauffe-tuyau selon l'une des revendications précédentes, dans lequel l'élément chauffant, qui peut être chauffé, en particulier de manière électrique, inductive et/ou résistive, est disposé sur au moins la moitié de la circonférence de la section transversale en une seule couche autour de la section transversale qu'il renferme et/ou est enroulé au maximum une fois et demie autour de la section transversale qu'il renferme.

4. Chauffe-tuyau selon l'une des revendications précédentes, dans lequel le chauffe-tuyau est conçu de manière flexible et/ou avec au moins trois joints et/ou un affaiblissement du matériau et/ou les zones sont chacune conçues de manière rigide et/ou dans lequel l'élément chauffant est conçu de manière à ce que la réduction de la section transversale puisse être effectuée en modifiant les angles d'attaque des zones chauffées adjacentes, en particulier toutes les zones adjacentes, en particulier de manière électrique, inductive et/ou résistive, par l'intermédiaire des joints et/ou des affaiblissements du matériau.

5. Chauffe-tuyau selon l'une des revendications précédentes, dans lequel ledit au moins un élément chauffant et/ou ses parties et/ou plaques chauffantes ont une capacité calorifique spécifique inférieure à 1000 J/K/kg.

6. Chauffe-tuyau selon l'une des revendications précédentes, dans lequel le chauffe-tuyau, en particulier l'élément chauffant et/ou l'isolation, est conçu pour être découpé, en particulier en deux parties avec un espace entre elles, la séparation s'effectuant en particulier parallèlement au plan de la section transversale.

7. Chauffe-tuyau selon l'une quelconque des revendications précédentes, dans lequel chacune des moitiés prévues pour la séparation est conçue pour maintenir sa forme de section transversale réduite au moins contre une force d'écartement de 1 N.

8. Chauffe-tuyau selon l'une quelconque des revendications précédentes, dans lequel le chauffe-tuyau, en particulier les plaques chauffantes, comporte des trous et/ou des évidements disposés de manière à permettre le passage de la matière thermoplastique lorsqu'elle est comprimée.

9. Tuyau thermoplastique, en particulier un tuyau en élastomère thermoplastique, comportant au moins un élément chauffant, conçu comme au moins un clip chauffant, en particulier électriquement, par induction et/ou par résistance, et/ou au moins un anneau chauffant, en particulier électriquement, par induction et/ou par résistance, qui entoure le tuyau, l'anneau et/ou le clip recouvrant au moins 75 % de la circonférence du tuyau sur la circonférence de ce dernier en au moins quatre points espacés les uns des autres, et dans lequel l'élément chauffant est conçu pour être déformable de telle sorte qu'une section transversale qu'il renferme peut être réduite d'au moins 30 %, en particulier de plus de 50 %, et/ou peut être réduite dans son extension dans une direction de la section transversale d'au moins 30 %, en particulier de plus de 50 %, en comprimant et/ou en étirant l'élément chauffant, dans lequel des zones chauffantes (2) mutuellement mobiles, en particulier de manière électrique, inductive et/ou résistive, sont formées par un ou plusieurs éléments en forme de plaque et entre au moins deux paires d'éléments en forme de plaque mutuellement adjacents, il y a dans chaque cas un joint et/ou un affaiblissement du matériau qui permet de modifier l'angle des éléments en forme de plaque de la paire respective l'un par rapport à l'autre, **caractérisé par le fait que** l'élément chauffant est conçu pour maintenir la section fermée réduite au moins contre une force de 1 N qui écarte l'élément chauffant au moins dans la mesure où la section fermée réduite n'augmente pas de plus de 10 %.

10. Actionneur de dispositif de scellage de tuyau comprenant des moyens pour recevoir un dispositif de chauffage de tuyau comprenant au moins un élément chauffant, en particulier électrique, inductif et/ou résistif, dans lequel l'élément chauffant comprend au moins quatre, en particulier au moins six, zones chauffantes (2) mutuellement mobiles, en particulier électriques, inductives et/ou résistives, zones chauffantes (2) qui peuvent être déplacées l'une par rapport à l'autre, notamment de manière électrique, inductive et/ou résistive, et l'élément chauffant est conçu pour entourer un tuyau (10) d'un diamètre extérieur compris entre 3 mm et 45 mm, s'appuyant sur ce dernier sur sa circonférence en au moins quatre points espacés les uns des autres, et l'élément chauffant est conçu de manière à pouvoir être déformé, notamment de manière non réversible et/ou non élastique, qu'une section qu'il renferme peut être réduite et/ou aplatie d'au moins 30%, en particulier d'au moins 50%, notamment selon l'une des revendications précédentes 1 à 8 avec un tuyau qui y est logé et des moyens, notamment comprenant au moyen d'au moins un vérin hydraulique et/ou pneumatique, agencés pour déformer le chauffe-tuyau logé de telle sorte que la section qu'il renferme soit réduite d'au moins 30%, en particulier de plus de 50%, dans lequel l'actionneur du dispositif de fermeture du tuyau comprend au moins un moyen d'effectuer un chauffage inductif et/ou résistif de l'élément chauffant, en particulier au moins une bobine d'induction pour le chauffage inductif et/ou un dispositif de chauffage pour le chauffage résistif de l'élément chauffant, **caractérisé en ce que** l'actionneur du dispositif de fermeture du tuyau comprend au moins une bobine d'induction pour le chauffage inductif et/ou un dispositif de chauffage pour le chauffage résistif de l'élément chauffant :
a. comporte une articulation sur laquelle sont disposées deux mâchoires et/ou deux jambes, toutes deux dotées d'au moins un dispositif de chauffage et/ou d'une (de) bobine(s) d'induction, ou
b. est constitué de deux parties, les deux parties étant rendues rigides et réversibles l'une par rapport à l'autre et comportant chacune des moyens de déformation et au moins un dispositif de chauffage et/ou une (des) bobine(s) d'induction, ou
c. en forme de C ou de U, les parties opposées des extrémités ayant chacune des moyens de déformation et au moins un dispositif de chauffage et/ou une (des) bobine(s) d'induction.

11. Actionneur de dispositif de scellage de tuyau, notamment sous forme de pince et/ou de deux mâchoires reliées à une charnière, pour l'étanchéité de tuyaux thermoplastiques, notamment de tuyaux en élastomère thermoplastique, comprenant au moins un élément chauffant qui peut être chauffé, notamment électriquement, par induction et/ou de manière résistive, dans lequel ledit au moins un élément chauffant comporte au moins quatre, en particulier au moins six, zones chauffantes mobiles les unes par rapport aux autres, et l'élément chauffant est conçu pour être placé dans une direction perpendiculaire à l'étendue longitudinale sur un tuyau (10) ayant un diamètre extérieur compris entre 3 mm et 45 mm, et pour entourer au moins 75 % de sa circonférence, en s'appuyant sur le tuyau sur sa circonférence en au moins quatre points espacés les uns des autres, et dans lequel l'actionneur du dispositif de fermeture du tuyau est conçu pour déplacer ledit au moins un élément chauffant, en particulier au moyen d'au moins un cylindre hydraulique et/ou pneumatique, de manière à réduire d'au moins 30 %, en particulier de plus de 50 %, la section transversale qu'il renferme, en particulier celle d'un tuyau thermoplastique, et/ou à réduire d'au moins 30 %, en particulier de plus de 50 %, son extension dans une direction de la section transversale, l'actionneur du dispositif de fermeture du tuyau comportant en particulier au moins une bobine d'induction pour le chauffage électrique, inductif et/ou un dispositif de chauffage pour le chauffage résistif de l'élément chauffant.

12. Actionneur de dispositif de scellage de tuyau selon la revendication 10 ou 11, comprenant au moins un dispositif de coupe pour couper un tuyau et/ou au moins un capteur de température.

13. Système de scellage de tuyau comprenant au moins un chauffe-tuyau, en particulier ayant une pluralité de diamètres intérieurs différents, selon l'une des revendications précédentes 1 à 8 et/ou au moins un tuyau, en particulier ayant une pluralité de diamètres intérieurs différents, selon la revendication précédente 9 et au moins un, en particulier exactement un actionneur de dispositif de scellage de tuyau selon la revendication précédente 10, 11 ou 12.

14. Procédé de scellage d'un tuyau thermoplastique, en particulier d'un tuyau en élastomère thermoplastique, notamment selon la revendication 9, comprenant les étapes suivantes :
- enveloppe au moins partielle d'une section du tuyau avec au moins un élément chauffant, en particulier électrique, inductif et/ou résistif, et/ou utilisation d'un tuyau thermoplastique avec un élément chauffant, en particulier électrique, inductif et/ou résistif, l'enveloppant, dans lequel l'élément chauffant bute au moins partiellement sur la circonférence du tuyau, et en entourant le tuyau et/ou l'élément chauffant sur au moins deux côtés opposés au niveau et/ou à côté de la section du tuyau avec un moyen de compression du tuyau, en particulier selon l'une des revendications précédentes 10 à 12 et **caractérisé par** le chauffage de l'élément chauffant et le chauffage du tuyau avec l'élément chauffant chauffé, en particulier jusqu'à ce qu'au moins à la circonférence, en particulier sur toute l'épaisseur de la paroi du tuyau, la dureté Shore A de la section soit réduite d'au moins 30 % et/ou qu'au moins à la circonférence, en particulier sur toute l'épaisseur de la paroi du tuyau, la température de verre et/ou la température de transition vitreuse soit atteinte,
- compression du tuyau à l'aide du dispositif de compression du tuyau, en particulier pendant que le chauffage de l'élément chauffant et/ou le chauffage de la section à l'aide de l'élément chauffant se poursuit, et
- dépose des moyens de compression et en particulier de l'élément chauffant.

15. Utilisation d'au moins un élément chauffant, en particulier électrique, inductif et/ou résistif, pour sceller un tuyau thermoplastique, en particulier un tuyau en élastomère thermoplastique, en particulier selon la revendication 9, dans laquelle une section du tuyau thermoplastique est et/ou est entourée par ledit au moins un élément chauffant, en particulier électrique, inductif et/ou résistif, et **caractérisé par le fait que**, ledit au moins un élément chauffant est chauffé et donc que la section est chauffée, en particulier jusqu'à ce qu'au moins à la circonférence, en particulier sur toute l'épaisseur de la paroi du tuyau, la dureté Shore A de la section soit réduite d'au moins 30 % et/ou qu'au moins à la circonférence, en particulier sur toute l'épaisseur de la paroi du tuyau, la température de verre et/ou la température de transition vitreuse soit atteinte, et en comprimant le tuyau dans et/ou à côté de la section, en particulier pendant que le chauffage de l'élément chauffant et/ou le chauffage de la section avec l'élément chauffant chauffé se poursuivent.
